# EUROPEAN PATENT APPLICATION

(11) **EP 4 293 432 A1**
(43) Date of publication of application: **20.12.2023**
(21) Application number: 21925633.6
(22) Date of filing: 10.02.2021
(51) Int. Cl.: G05B 9/02, G06F 13/00

(54) **INFORMATION PROCESSING SYSTEM, INFORMATION PROCESSING METHOD, AND INFORMATION PROCESSING PROGRAM**

(71) Applicant: Digital Arts Inc., Tokyo 100-0004 (JP)
(72) Inventor: DOGU Toshio, Tokyo 100-0004 (JP)
(74) Representative: Hindles Limited
(86) International application number: PCT/JP2021/005115
(87) International publication number: WO 2022/172380

(57) **Abstract**

[PROBLEM] An information processing system, an information processing method, and an information processing program capable of maintaining safety of a control operation of a device in the device that can be controlled via a network are provided.

[MEANS FOR SOLUTION] An information processing system 100 is a system capable of performing control of devices via a network, the system comprises: a white control condition registration unit 18 in which an appropriate control condition in each of the devices is registered in advance; and a control unit 17 that executes control of the devices by collating setting information set to execute the control on the devices with the appropriate control condition corresponding to setting on the devices.

## Description

### Technical Field

Embodiments of the present invention relates to an information processing system, an information processing method, and an information processing program.

### Background Art

The Internet of Things (IoT) has progressed, a generalpurpose device in the home, a mobile body such as an automobile, and the like are connected to the Internet, each device can be accessed and controlled from anywhere, and a more convenient society using data is being realized, such as making supply of power or the like efficient by utilizing various data acquired from devices.

Further, in recent years, development of artificial intelligence (AI) has rapidly progressed, and it is possible to construct a system more comfortable for a user by causing a machine to learn enormous information such as data acquired from devices and generate an optimal control model.

### Citation List

### Patent Literature

Patent Literature 1: JP 2010-539574 A

### SUMMARY OF INVENTION

### PROBLEM TO BE SOLVED BY INVENTION

With the progress of the IoT, while various devices can be controlled anywhere via the Internet, it is difficult to prevent vulnerability of the devices in advance, and there is always a possibility that the devices are subjected to cyber-attacks via the Internet, such as a malicious third party invading the devices so as to intentionally operate the devices.

Further, there is a case where the artificial intelligence cannot form a correct control model unless learning is performed with a large amount of data information, and erroneous recognition occurs in a control model generated by insufficient data. Therefore, in a case where the control of a device is entrusted to the artificial intelligence, there is a possibility that a control operation unexpected by the user occurs.

The present invention has been made in view of such circumstances, and has an object to provide an information processing system, an information processing method, and an information processing program capable of maintaining safety of a control operation of a device in the device that can be controlled via a network.

### MEANS FOR SOLVING PROBLEM

An information processing system according to an embodiment of the present invention is a system capable of performing control of devices via a network, the system comprise: a white control condition registration unit in which an appropriate control condition in each of the devices is registered in advance; and a control unit that executes control of the devices by collating setting information set to execute the control on the devices with the appropriate control condition corresponding to setting on the devices.

### EFFECT OF INVENTION

According to an embodiment of the present invention, an information processing system, an information processing method and an information processing program capable of maintaining safety of a control operation of a device in the device that can be controlled via a network are provided.

### BRIEF DESCRIPTION OF DRAWINGS

Fig. 1 is a configuration diagram illustrating an example of a configuration of an information processing system according to the present embodiment.
Fig. 2 is a diagram illustrating an example of a white control condition set corresponding to each of devices.
Fig. 3 is a diagram illustrating an example of authentication information used for authentication of an administrator terminal in a device control unit.
Fig. 4 is a flowchart illustrating an example of an information processing method according to the present embodiment.
Fig. 5 is a flowchart illustrating a flow of authentication of an administrator terminal in the information processing method according to the present embodiment.

### DETAILED DESCRIPTION

Hereinafter, an embodiment of the present invention will be described with reference to the accompanying drawings.

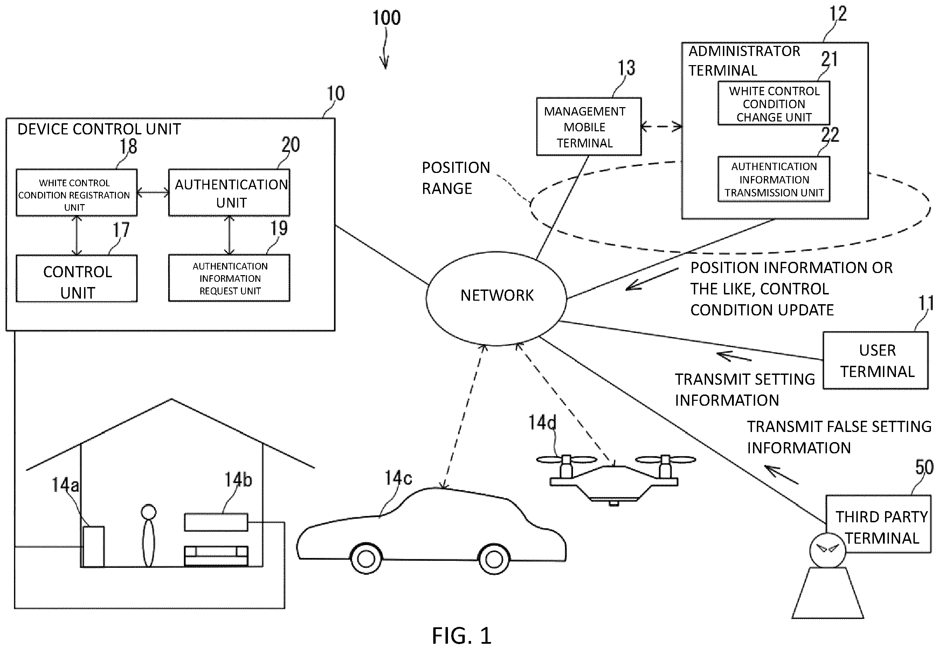

Fig. 1 is a diagram illustrating an example of a configuration of an information processing system 100 according to the present embodiment.

The information processing system 100 according to the embodiment is a system that retains safety of a control operation of devices 14 by registering an appropriate control condition (hereinafter, it is appropriately referred to as a "white control condition") in each of the devices 14 in advance that can be controlled via a network such as the Internet, and executing control of the devices 14 by collating setting information set by the user to execute the control on the devices 14 with the appropriate control condition corresponding to setting on the devices 14.

Here, the devices 14 mean all devices whose operation can be controlled via a network such as the Internet, and examples thereof include household devices (for example, a refrigerator 14a or an air conditioner 14b), mobile bodies (for example, an automobile 14c and a drone 14d), and manufacturing apparatuses (not illustrated) disposed in a manufacturing plant.

A specific configuration will be described.

The information processing system 100 includes a device control unit 10, a user terminal 11, an administrator terminal 12, a management mobile terminal 13, and the devices 14.

The device control unit 10 is communicably connected to the devices 14 via a network. Note that the device control unit 10 and the devices 14 may be directly communicably connected like the devices 14 (14a and 14b) and the like illustrated in Fig. 1.

The device control unit 10 receives setting information set by the user to control the devices 14. As the setting information for the devices 14 set by the user, a signal of the setting information may be directly input from the user to the devices 14 (for example, an input by a remote controller or a touch panel, or a user's control operation for controlling a speed or the like in a mobile body), or a signal of the setting information may be transmitted from the user terminal 11 to the devices 14 via the network, and the device control unit 10 receives the setting information set by the user at all times.

The user terminal 11 is a terminal capable of transmitting setting information for controlling an operation to the devices 14. When transmitting the setting information, the user terminal 11 performs authentication such as login authentication with each of the devices 14, and transmits the setting information by the user to the device 14. At this time, the setting information by the user is also transmitted to the device control unit 10. Note that authentication between the user terminal 11 and the device 14 may be executed in multiple stages such as biometric authentication of the user by the user terminal 11 in addition to the login authentication.

The device control unit 10 includes a control unit 17, a white control condition registration unit 18, an authentication information request unit 19, and an authentication unit 20. Note that the device control unit 10 may be disposed on the network to control each of the devices 14 owned by one user, or may be disposed on the network to control the devices 14 owned by each user with a plurality of users as one group.

Note that a function of each unit constituting the device control unit 10 may be implemented by executing a predetermined program code using a processor but is not limited to such software processing, and for example, the function may be implemented by hardware processing using an ASIC or the like, or may be implemented by combining software processing and hardware processing.

In the white control condition registration unit 18, an appropriate control condition in each of the devices 14 is registered in advance. As the appropriate control condition registered for each of the devices 14, an appropriate condition is set in association with each of items set by the user to execute control. The appropriate control condition registered in the white control condition registration unit 18 is set by the administrator of the administrator terminal 12 to be described later. In addition, an administrator who has received authentication may directly set the appropriate control condition to the device control unit 10.

More specifically, in the white control condition, control items are set in association with identification information for identifying each of the devices 14, and a control value and a control range appropriate for the device 14 to operate are set for each of the control items. Any item other than the control value and the control range set as the appropriate control condition is a condition of control that is not assumed in terms of operation of the devices 14.

Examples of the control items include a set temperature and a set air volume of the device 14, a start time at which the operation is to be started (or an end time), an operation duration, and the like, and include a speed, a rotation speed, and the like in a case of the mobile body or the manufacturing apparatuses disposed in a manufacturing plant. In addition, as a control item, a control value or a control range appropriate for the operation of the device 14 may be set as the white control condition for various data acquired using sensors or the like disposed in the device 14 after the control operation of the device 14 is started. For example, a sound volume inside the device 14 and a frequency, a temperature, a pressure, a remaining amount of fuel, power, voltage, current, position information, and the like of the device 14 that can be acquired via the sensors are set. An appropriate position range may be set for position information of the device 14. The appropriate position range may be specified by coordinates or may be specified by a certain position range (a certain region (for example, within a radius of 10 meters) centered on the specified position coordinates).

Furthermore, an operation order (operation flow) appropriate for the operation of the device 14 may be set as a control item after the control operation of the device 14 is started.

In addition, in a case where the user makes a setting to sequentially record and save execution information of the control operation of the device 14 as a log, the storage destination of the log may be set as a control item. For example, the execution information of the control operation of the device 14 is set in the device 14 itself as an appropriate storage destination of the log in which the execution information is recorded. The log stored in the device 14 may be configured to be browsable only by a display device such as a display of the device 14.

In addition, a storage medium provided in the device control unit 10 may be set as an appropriate storage destination of the log. In this case, the log stored in the device control unit 10 may be configured to be accessible (browsable) only from the administrator terminal 12 whose authentication by the authentication unit 20 of the device control unit 10 matches. Note that a method of authenticating the device control unit 10 and the administrator terminal 12 will be described later. Thus, since the log stored in the device control unit 10 can be accessed only from the authenticated terminal, the log data can be safely stored.

In addition, the white control condition is not limited to a case where one appropriate control value or control range is set for one control item, and after one appropriate control value or the like is set for one control item, an accompanying control item may be further set, and an appropriate control value or the like may be set. Thus, an appropriate control condition can be set more finely for one control item.

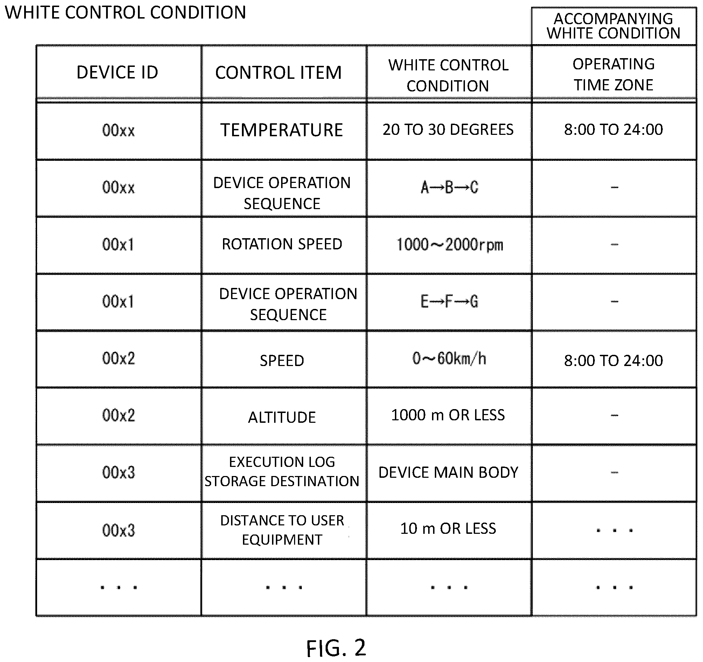

Fig. 2 is a diagram illustrating an example of the white control condition set for each of the devices 14. A control item is set in association with an identification ID of each of the devices 14, and a control value and a control range (white control condition) appropriate for the operation of the devices 14 are set in each item. For example, for the identification ID of the device 14 of 00xx, two control items of "temperature" and "device 14 operation sequence" are set, and an appropriate temperature range and operation sequence are determined for each item. Furthermore, for the control item "temperature", an accompanying condition of "operating time zone" is set, and an appropriate operating time zone is added as an additional condition. Similarly, control items are also set for identification IDs 00x1 and 00x2 of the devices 14, and white control conditions are set for each of them. Further, when the identification ID is 00x3, the main body of the device 14 is set as an appropriate storage destination of the log of the device 14.

Returning to Fig. 1, the description will be continued.

The control unit 17 executes control of the device 14 by collating the setting information set to execute control on the device 14 with the appropriate control condition corresponding to the setting on the device 14.

When setting information (for example, the temperature of the device 14) set by the user matches the white control condition of the control item corresponding to this setting information or falls within a range thereof, it is determined that the setting information is normal.

On the other hand, when the setting information set by the user does not match the white control condition of the control item corresponding to this setting information or is out of the range, the control unit 17 determines that the setting is abnormal. When it is determined that the setting is abnormal, the control operation of the device 14 is stopped, or the setting is automatically changed to an appropriate control value. In addition, the user terminal 11, the administrator terminal 12, or the management mobile terminal 13 may be notified that an abnormal setting value has been set. Thus, in the device 14, the safety of the control operation is maintained at all times.

In addition, at the time of authentication such as login authentication between the user terminal 11 and the device 14, the device control unit 10 may acquire position information of the user terminal 11 at the time of login as setting information of the user. In this case, the white control condition may be set on the basis of the position information of the user terminal 11. Specifically, an appropriate position range of the user terminal 11 is set as the white control condition. The appropriate position range may be specified by coordinates or may be specified by a certain position range (a certain region (for example, within a radius of 10 meters) centered on the specified position coordinates). In addition, a distance (for example, within 30 meters) between the device 14 and the user terminal 11 may be set as the white control condition in advance, and in a case where the distance between the device 14 and the user terminal 11 exceeds the set distance, the control unit 17 may determine that it is abnormal setting by the user terminal 11. Furthermore, the distance set as the white control condition is not limited to the distance between the device 14 and the user terminal 11, and may be set on the basis of a distance between an apparatus or device (for example, a network relay) capable of acquiring a position and the user terminal 11. The position information of the user terminal 11 may be continuously acquired not only at the time of login authentication but also in a state where the user terminal 11 is accessing the device 14.

In addition, in a case where the device 14 disposed in a plant or the like is controlled from a portable terminal such as a tablet, position information of the tablet terminal may be acquired as setting information of the user. The white control condition may be set based on the position information of the tablet terminal. Specifically, an appropriate position range of the tablet terminal is set. In addition, a distance (for example, within 10 meters) between the device 14 and the portable terminal may be set as the white control condition in advance, and in a case where the distance exceeds the range of the set distance, the control unit 17 may determine that it is abnormal setting by the portable terminal. Furthermore, the distance set as the white control condition is not limited to the distance between the device 14 and the portable terminal device, and may be set on the basis of a distance between an apparatus or device (for example, a network relay) capable of acquiring a position and the portable terminal.

Furthermore, position information of the user terminal 11, the device 14, and the administrator terminal 12 that manages the white control condition to be described later may be acquired, and the white control condition may be set on the basis of the three pieces of position information. Specifically, the user terminal 11, the device 14, and the administrator terminal 12 set a position range in which they are to be located at the same time as the appropriate control condition. For example, it is set as the appropriate control condition that the user terminal 11, the device 14, and the administrator terminal 12 are simultaneously located in a specific region (for example, Tokyo), and in a case where any one of the devices is not in the set region, the control unit 17 may determine that it is abnormal setting. Furthermore, for each of the user terminal 11, the device 14, and the administrator terminal 12, a position range in which the device is to be located may be set individually, or appropriate position ranges may be combined and set such as setting a position range (for example, Tokyo) in which the user terminal 11 and the device 14 are to be located at the same time, and setting another position range (for example, Osaka) for the administrator terminal 12.

For example, even in a case where a malicious third party terminal 50 transmits false setting information so as to illegally access the device 14 and causes the device 14 to operate abnormally, when the false setting information is out of the range of the white control condition, the false setting information is not set in the device 14, and the safety of the control operation is maintained.

Further, there is a case where control of the device 14 is control to form a control model optimal in operation of the device 14, that is, artificial intelligence (AI) by performing machine learning from setting information input in the past and acquired data of the sensors or the like disposed in the device 14, and is control based on this model. In this case, the control unit 17 may execute control of the device 14 by collating the setting information set to the device 14 by the control model formed in the machine learning with the appropriate control condition corresponding to the setting on the device 14.

In the case of forming the control model by machine learning, in the control model in a state where there is little data for learning, the state of the device 14 cannot be sufficiently recognized by AI, and malfunction may occur. In the present embodiment, the setting information set to the device 14 by the control model is collated with the appropriate control condition (white control condition) corresponding to the setting on the device 14, and the control of the device 14 is executed. Specifically, the control unit 17 collates the setting information by the artificial intelligence with the appropriate control condition (white control condition). When the setting information by the artificial intelligence does not match the white control condition of the control item corresponding to the setting information or is out of the range, it is determined that it is abnormal setting. When it is determined that it is abnormal, the control operation of the device 14 is stopped, or the setting is automatically changed to an appropriate control value. In this manner, abnormal operation due to erroneous recognition by the artificial intelligence can be prevented, and the safety of the control operation of the device 14 can be maintained.

Next, a case of changing (updating) the white control condition of the device 14 registered in the white control condition registration unit 18 will be considered.

The administrator terminal 12 is a terminal for managing the appropriate control condition corresponding to each of the devices 14 registered in the white control condition registration unit 18. The administrator terminal 12 includes a white control condition change unit 21 and an authentication information transmission unit 22.

Here, in the authentication unit 20 of the device control unit 10, authentication information for identifying and authenticating the administrator terminal 12 when there is access from the administrator terminal 12 is registered in advance. For example, position information of the administrator terminal 12 is registered as the authentication information. Note that, as the authentication information, unique identification information (such as the MAC address of the terminal) for identifying the administrator terminal 12, or biometric information such as fingerprint information or "face" information of the administrator of the administrator terminal 12 may be registered.

When updating the white control condition, the white control condition change unit 21 of the administrator terminal 12 transmits the updated control condition to the device control unit 10 to request a change in the control condition. The authentication information request unit 19 of the device control unit 10 that has received the update of the white control condition requests the administrator terminal 12 for authentication information of the administrator terminal 12.

Then, the authentication information transmission unit 22 of the administrator terminal 12 transmits the authentication information of the administrator terminal 12 to the device control unit 10.

The authentication unit 20 of the device control unit 10 collates the authentication information received from the administrator terminal 12 with the registered authentication information registered in advance to determine whether or not it is a request for update of the white control condition from the correct administrator terminal 12. When the received authentication information matches the registered authentication information, access from the correct administrator terminal 12 is allowed, and the white control condition of the white control condition registration unit 18 is overwritten and updated.

On the other hand, when the received authentication information does not match the registered authentication information, the white control condition of the white control condition registration unit 18 is not updated. In this manner, the white control condition of the white control condition registration unit 18 can be updated only from the administrator terminal 12.

In addition, the administrator terminal 12 may be authenticated using the management mobile terminal 13 registered in association with the administrator terminal 12. At this time, identification information (identification number, telephone number, position information, and the like of the mobile terminal) for identifying the management mobile terminal 13 is associated with the administrator terminal 12.

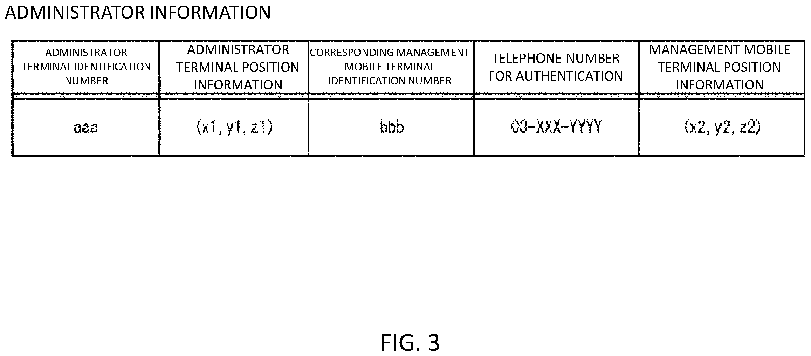

Fig. 3 is a diagram illustrating an example of authentication information used for authentication of the administrator terminal 12.

In the authentication unit 20 of the device control unit 10, the position information of the administrator terminal 12 is registered corresponding to the identification number of the administrator terminal 12. In addition, an identification number, a telephone number, and position information of the management mobile terminal 13 are registered in association with the administrator terminal 12. Note that the position information may be specified by coordinates or by a certain position range (a certain region (for example, within a radius of 10 meters) centered on the specified position coordinates).

As an authentication method of the administrator terminal 12 using the management mobile terminal 13, specifically, the authentication information request unit 19 of the device control unit 10 that has received the update of the white control condition transmits a key for authentication (identification code) to the management mobile terminal 13 and requests the administrator terminal 12 to transmit the key for authentication. The key for authentication is, for example, a randomly generated onetime password.

When the same key as the key for authentication previously transmitted to the management mobile terminal 13 is received from the administrator terminal 12, the authentication unit 20 of the device control unit 10 recognizes that it is access from the correct administrator terminal 12 and overwrites and updates the white control condition of the white control condition registration unit 18.

In addition, the authentication unit 20 of the device control unit 10 may use the position information of the management mobile terminal 13 for authentication of the administrator terminal 12. Note that the authentication unit 20 of the device control unit 10 may be separately constituted of a server that includes a plurality of authentication servers and transmits the key for authentication to the management mobile terminal 13 and a server that receives the key for authentication from the administrator terminal 12 and performs authentication.

As described above, the authentication unit 20 of the device control unit 10 can firmly protect the white control condition of the white control condition registration unit 18 by authenticating whether or not the access is from the correct administrator terminal 12 using the position information of the administrator terminal 12 or the like. Even when the malicious third party terminal 50 tries to change the white control condition, since the authentication of the device control unit 10 cannot be recognized, the white control condition cannot be changed.

Next, an operation of the information processing system 100 according to the present embodiment will be described.

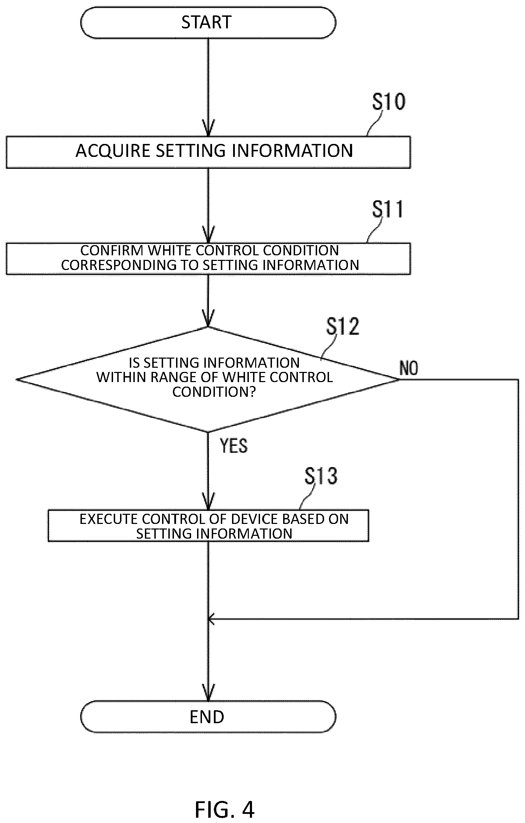

Fig. 4 is a flowchart illustrating an example of the information processing method according to the present embodiment (see Fig. 1 as appropriate).

The control unit 17 of the device control unit 10 receives setting information set by the user (S10). Then, the control unit 17 confirms the white control condition corresponding to the setting information set by the user (S11) .

When the setting information set by the user matches the white control condition of the control item corresponding to this setting information or falls within the range thereof, the control unit 17 determines that the setting information is normal and continues the control of the device 14 based on the setting information (S12: YES, S13) .

On the other hand, when the setting information set by the user does not match the white control condition of the control item corresponding to this setting information or is out of the range, the control unit 17 determines that it is abnormal setting and, for example, stops the control operation of the device 14 (S12: NO). Note that the control unit 17 may acquire the position information of the user terminal 11 at the time of authentication such as login authentication between the user terminal 11 and the device 14, and determine whether or not it is abnormal setting on the basis of the distance between the device 14 and the user terminal 11.

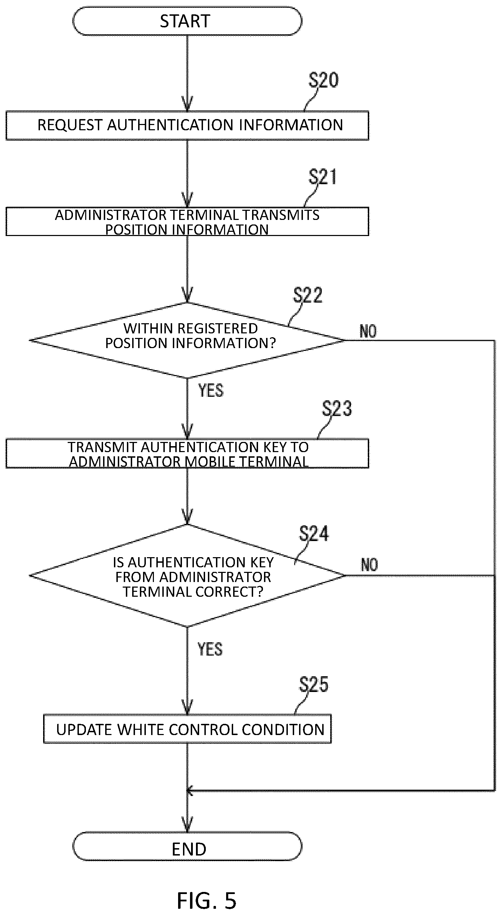

Subsequently, Fig. 5 is a flowchart illustrating a flow of authentication of the administrator terminal 12 in the information processing method according to the present embodiment (see Fig. 1 as appropriate). Here, a case where the white control condition change unit 21 of the administrator terminal 12 transmits the updated control condition to the white control condition registration unit 18 when updating the white control condition will be considered.

The authentication information request unit 19 of the device control unit 10 requests the administrator terminal 12 for authentication information (S20).

Subsequently, the authentication information transmission unit 22 of the administrator terminal 12 transmits the position information of the administrator terminal 12 to the device control unit 10 (S21).

The authentication unit 20 of the device control unit 10 collates the transmitted position information with the registered position information. When the transmitted position information is not within the range of the registered position information, it is determined that the access is not correct and the process ends (S22: NO, END).

On the other hand, when the transmitted position information is in the range of the registered position information, the authentication unit 20 transmits an authentication key to the management mobile terminal 13 (S22: YES, S23).

Then, the administrator of the administrator terminal 12 checks the authentication key with the management mobile terminal 13, and transmits the authentication key from the administrator terminal 12 to the device control unit 10.

When the authentication key transmitted from the administrator terminal 12 is correct, the authentication unit 20 of the device control unit 10 updates the white control condition (S24: YES, S25). On the other hand, when the transmitted authentication key is not correct, it is determined that the access is not correct, and the process ends (S24: NO, END).

According to the information processing system of the embodiment described above, the safety of the control operation of devices can be maintained by registering an appropriate control condition in each of the devices in advance, executing control of the devices by collating setting information set to execute the control on the devices with the appropriate control condition corresponding to setting on the devices. In addition, it is possible to firmly protect the white control condition by authenticating whether or not the access is from the correct administrator terminal.

Note that the program executed by the device constituting the information processing system is provided by being incorporated in a storage circuit such as a ROM in advance. Alternatively, the program may be provided by being stored in a computer-readable storage medium such as a CD-ROM, a CD-R, a memory card, a DVD, or a flexible disk as a file in an installable format or an executable format. In addition, the program executed by the information processing system may be stored on a computer connected to a network such as the Internet, downloaded via the network, and provided.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

### Reference Signs List

- 10: Device control unit
- 11: User terminal
- 12: Administrator terminal
- 13: Management mobile terminal
- 14a, 14b: Household device
- 14c: Mobile body (automobile)
- 14d: Mobile body (drone)
- 17: Control unit
- 18: White control condition registration unit
- 19: Authentication information request unit
- 20: Authentication unit
- 21: White control condition change unit
- 22: Authentication information transmission unit
- 50: Third party terminal
- 100: Information processing system

## Claims

1. An information processing system capable of performing control of devices via a network, the system comprising:
a white control condition registration unit in which an appropriate control condition in each of the devices is registered in advance; and
a control unit that executes control of the devices by collating setting information set to execute the control on the devices with the appropriate control condition corresponding to setting on the devices.

2. The information processing system according to claim 1, wherein
as the appropriate control condition registered in each of the devices, an appropriate condition is set in association with each of items set by a user to execute the control.

3. The information processing system according to claim 1, wherein
in a case where the control of the devices is control using machine learning,
the control unit executes the control of the devices by collating setting information set by a control model generated in machine learning with the appropriate control condition corresponding to setting on the devices.

4. The information processing system according to claim 1, further comprising:
an administrator terminal that manages the appropriate control condition corresponding to each of the devices and transmits the control condition that has been updated to the white control condition registration unit, wherein
the information processing system further has an authentication unit that requests authentication information of the administrator terminal from the administrator terminal when the updated control condition is transmitted, and permits update of the updated control condition in the white control condition registration unit when the authentication information matches registered authentication information registered in advance.

5. The information processing system according to claim 4, wherein
the authentication information is position information of the administrator terminal.

6. The information processing system according to claim 4, further comprising:
a management mobile terminal registered corresponding to the administrator terminal, wherein
the authentication unit transmits an identification code for authentication to the management mobile terminal when the updated control condition is transmitted, and permits update of the updated control condition in the white control condition registration unit when the identification code is received from the administrator terminal.

7. The information processing system according to claim 1, wherein
the setting information includes position information of user equipment that controls the devices, and
in the white control condition registration unit, an appropriate control condition is registered in advance on a basis of the position information of the user equipment.

8. The information processing system according to claim 4, wherein
the setting information includes position information of the devices, user equipment that controls the devices, and the administrator terminal, and
in the white control condition registration unit, an appropriate control condition is registered in advance on a basis of the position information of any one of the devices, the user equipment that controls the devices, and the administrator terminal.

9. An information processing method capable of performing control of devices via a network, the method comprising:
a step of registering an appropriate control condition in each of the devices in white control condition registration unit in advance; and
a step of executing control of the devices by collating setting information set to execute the control on the devices with the appropriate control condition corresponding to setting on the devices.

10. An information processing program causing a computer to function to
register an appropriate control condition in each of devices capable of being controlled via a network in white control condition registration unit in advance; and
execute control of the devices by collating setting information set to execute the control on the devices with the appropriate control condition corresponding to setting on the devices.
